**Europäisches Patentamt**

**European Patent Office**

**Office européen des brevets**

(19)

(11) Veröffentlichungsnummer: **0 135 743**
**B1**

(12) **EUROPÄISCHE PATENTSCHRIFT**

(45) Veröffentlichungstag der Patentschrift:
**08.10.86**

(21) Anmeldenummer: **84109274.5**

(22) Anmeldetag: **04.08.84**

(51) Int. Cl.⁴: **B 01 D 11/02, A 23 F 5/24**

(54) Verfahren zur Trennung von organische Bestandteile enthaltende Stoffgemischen.

(30) Priorität: **03.09.83 DE 3331906**

(43) Veröffentlichungstag der Anmeldung:
**03.04.85 Patentblatt 85/14**

(45) Bekanntmachung des Hinweises auf die Patenterteilung:
**08.10.86 Patentblatt 86/41**

(84) Benannte Vertragsstaaten:
**AT BE CH FR GB IT LI NL SE**

(56) Entgegenhaltungen:
**DE - A - 2 637 197**
**DE - A - 2 737 793**
**DE - B - 1 493 190**
**US - A - 3 074 851**

(73) Patentinhaber: **MESSER GRIESHEIM GMBH, Hanauer Landstrasse 330, D-6000 Frankfurt/Main 1 (DE)**
Patentinhaber: **Kohlensäure-Werke Rud. Buse GmbH & Co., Postfach 02 41, D-5462 Bad Hönningen (DE)**

(72) Erfinder: **Gährs, Hans Jasper, Dr., Novalisstrasse 12, D-4000 Düsseldorf (DE)**

(74) Vertreter: **Roesner, Werner, MESSER GRIESHEIM GmbH Patentabteilung Postfach 111342, D-6000 Frankfurt 11 (DE)**

ACTORUM AG

## Beschreibung

Die Erfindung betrifft ein Verfahren zur Trennung von organische Bestandteile enthaltenden Stoffgemischen durch Hochdruckextraktion.

Bekannt ist die Tatsache, dass zahlreiche Gase auch für schwerflüchtige Substanzen ein hohes Lösungsvermögen besitzen, wenn sie unter hohen Drücken als Lösungsmittel verwendet werden. Bevorzugt werden die Gase hierbei unter überkritischen Bedingungen hinsichtlich Druck und Temperatur eingesetzt. Ein besonderer Vorteil der Hochdruckextraktion besteht darin, dass die Eigenschaften der verwendeten Lösungsmittel, also beispielsweise Lösungsvermögen und Selektivität, durch einfache Änderungen von Druck und Temperatur variiert werden können. Unter Ausnutzung dieser Eigenschaften sind zahlreiche Verfahren entwickelt worden, wie sie beispielsweise aus der DE-AS 14 93 190, DE-PS 20 05 293, DE-OS 21 06 133, DE-OS 21 27 596, DE-PS 21 27 642, DE-OS 22 12 281 und DE-OS 26 37 197 bekannt geworden sind.

Aus der DE-OS 27 37 793 ist es ferner bekannt, ein Mehrkomponentengas als Lösungsmittel zu verwenden. Hierbei wird dem eigentlichen als Lösungsmittel dienenden Gas ein sog. Schleppmittel beigefügt, wodurch die Löslichkeit für bestimmte Substanzen stark erhöht wird.

Die Anlagen zur Durchführung des Hochdruckextraktions-Verfahrens bestehen im Prinzip aus einem Extraktor und einem Abscheider. Im Extraktor durchströmt das Lösungsmittel das Stoffgemisch und löst dabei bestimmte Inhaltsstoffe. Diese werden im nachgeschalteten Abscheider vom Lösungsmittel möglichst weitgehend abgetrennt. Da die pro Lösungsmitteleinheit in den Abscheider transportierte Menge an Inhaltsstoffen im allgemeinen klein ist, müssen grosse Lösungsmittelmengen den Extraktor durchströmen, um befriedigende Extraktionsgrade zu erreichen. Aus wirtschaftlichen Gründen ist es daher notwendig, das von den Inhaltsstoffen möglichst weitgehend befreite Lösungsmittel aus dem Abscheider zur erneuten Verwendung in den Extraktor zurückzuführen und diesen Kreislauf aufrechtzuerhalten, bis der gewünschte Extraktionsgrad erreicht ist.

Von diesem Grundprinzip des Verfahrens gibt es zahlreiche Modifikationen. So sei hier als Beispiel die fraktionierte Extraktion bzw. Extraktgewinnung genannt. Hierbei werden mehrere Extraktoren und Abscheider unter unterschiedlichen Druck- und Temperaturbedingungen eingesetzt und/oder das Verfahren in aufeinanderfolgenden Schritten bei diesen Bedingungen durchgeführt. Bei all diesen Verfahrensstufen handelt es sich jedoch um das beschriebene Grundprinzip.

Von entscheidender Bedeutung für die Wirtschaftlichkeit des Hochdruckextraktions-Verfahrens ist die Abtrennung der gelösten Inhaltsstoffe aus dem Lösungsmittel. Eine ungenügende Abscheidung verschlechtert die Wirtschaftlichkeit des Verfahrens und begrenzt die Beladungsfähigkeit des Lösungsmittels für die weitergehende Extraktion. Die Abtrennung im Abscheider führt man entweder durch Druck- und Temperaturveränderungen durch, oder man verwendet verschiedene Abscheiderfüllungen, die beispielsweise nach den Prinzipien der Adsorption, der Gaswäsche oder des Ionenaustausches arbeiten.

Diese Abtrennverfahren haben zum Teil erhebliche Nachteile. Um eine weitgehende Abtrennung der gelösten Substanzen durch Druck- und Temperaturänderungen zu erreichen, muss in den meisten Fällen mit grossen Druck- bzw. Temperaturdifferenzen zwischen Extraktor und Abscheider gearbeitet werden. Dies bedeutet einerseits eine wesentliche Verteuerung des Prozesses und andererseits oft eine so starke thermische Belastung des Extraktes, dass dessen Qualität und Verwertbarkeit eingeschränkt wird. Günstiger ist daher an sich eine isobare und isotherme Abscheidung mit Hilfe von Adsorbern, Ionenaustauschern oder Waschlösungen. Bei diesen Verfahren ist der Hauptnachteil, dass das Extrakt in weiteren Prozessschritten wieder aus der Abscheiderstufe gewonnen werden muss. Dies ist technisch aufwendig und unwirtschaftlich, gelegentlich sogar unmöglich. So wird z.B. bei einer grosstechnischen Anwendung der Hochdruckextraktion zur Entcoffeinierung von Rohkaffee das extrahierte Coffein an Aktivkohle adsorbiert, ohne dass man es zurückgewinnt und weiterverwertet.

Der Erfindung liegt die Aufgabe zugrunde, ein Verfahren zur Hochdruckextraktion zu schaffen, bei dem die Abscheidung der extrahierten Inhaltsstoffe mit geringem technischen Aufwand wirtschaftlicher als bisher und insbesondere ohne thermische Belastung für das Extrakt durchgeführt werden kann.

Ausgehend von dem im Oberbegriff des Anspruches 1 berücksichtigten Stand der Technik ist diese Aufgabe erfindungsgemäss gelöst mit den im kennzeichnenden Teil des Anspruches 1 angegebenen Merkmalen. Vorteilhafte Weiterbildungen der Erfindung sind in den Unteransprüchen angegeben.

Die Erfindung beruht auf der Erkenntnis, dass die Löslichkeit eines guten Lösungsmittels bzw. Lösungsmittelgemisches bei gleichbleibenden Temperatur- und Druckbedingungen überraschenderweise durch Zumischung oft schon geringer Mengen einer Zusatzkomponente drastisch herabgesetzt werden kann, wodurch die gelösten Inhaltsstoffe nahezu vollständig ausfallen. Selbst wenn zur weitgehenden Abtrennung der gelösten Inhaltsstoffe trotz der erfindungsgemässen Zumischung einer Zusatzkomponente noch Temperatur- bzw. Druckänderungen erforderlich sind, so sind diese doch erheblich kleiner als beim Abtrennen ohne Zusatzkomponente. Die thermische Belastung des Extraktes wird somit zumindest entscheidend verringert, die technisch aufwendige Verwendung von Adsorben, Ionenaustauschern oder Waschlösungen entfällt völlig.

Das erfindungsgemässe Verfahren ist ausschliesslich auf die Verbesserung der Extraktabscheidung bei der Hochdruckextraktion gerichtet. Der Verfahrensablauf im Extraktor wird dadurch nicht berührt. Die Erfindung kann daher bei allen bekannten Hochdruckextraktions-Verfahren angewendet werden, d.h. bei allen Lösungen oder Lösungsmittelgemischen, beim Arbeiten im unterkritischen oder überkritischen Bereich und sowohl bei einfacher Extraktion als auch bei fraktionierter Extraktion mit parallel oder hintereinander geschalteten Extraktoren und Abscheidern.

Als Zusatzkomponente kommen alle Gase in Frage, die auch als Lösungsmittel verwendet werden können. Die hierfür gebräuchlichen Gase sind $CO_2$, $N_2O$, $NH_3$, $H_2O$, $N_2$, Ar oder organische Gase wie Methan, Äthan, Propan oder deren Derivate wie Methanol und Toluol oder chlorierte oder fluorierte Kohlenwasserstoffe. In den meisten Fällen sind als Zusatzkomponente allerdings anorganische Gase vorzuziehen, insbesondere $N_2$ oder Ar. Selbstverständlich kommen auch entsprechende Zusatzkomponentengemische in Betracht.

Die Zumischung der Zusatzkomponente kann in einer der Abtrennstufe vorgeschalteten Mischstufe erfolgen, sie kann aber auch in einer in den Abscheider integrierten Mischstufe erfolgen. Der Abscheider wird also im letzten Fall als Misch-Abtrennstufe ausgebildet. Konstruktiv kann die Mischstufe einfach gehalten werden und z.B. lediglich aus einer Düse für die Zusatzkomponente und einer Mischstrecke bestehen. Es können aber auch aufwendigere Mischtechniken angewendet werden.

Ebenso wie bei der Extraktion kann es auch bei der Abscheidung sinnvoll sein, mit mehreren Misch-Abtrennstufen zu arbeiten, welche parallel oder hintereinander geschaltet sein können. Hierbei können gleiche oder unterschiedlich zusammengesetzte Zusatzkomponenten verwendet werden. Wenn überhaupt Druck- oder Temperaturänderungen zur Optimierung des jeweiligen Extraktionsverfahrens noch nötig sind, so können diese nach jedem der Prozessschritte Extraktion, Mischung, Abtrennung und Lösungsmittelaufbereitung durchgeführt werden.

Da das vom Extrakt befreite Lösungsmittel aus wirtschaftlichen Gründen auf jeden Fall zur erneuten Extraktion verwendet werden muss, muss das Gemisch aus Lösungsmittel und Zusatzkomponente in einer Aufbereitungsstufe wieder voneinander getrennt werden. Werden Zusatzkomponentengemische verwendet, können mehrere Aufbereitungsstufen erforderlich werden. In der Regel ist es günstig, wenn nicht nur das Lösungsmittel, sondern auch die Zusatzkomponente nach der Aufbereitung erneut gemäss dem erfindungsgemässen Verfahren verwendet wird. Dies ist aber nicht unbedingt erforderlich. Zur Trennung des Gemisches aus Lösungsmittel und Zusatzkomponente können alle hierfür geeigneten und bekannten Verfahren angewendet werden. Die Auswahl richtet sich vor allem nach der Art des Gemisches und den Betriebsbedingungen. Beispielsweise kann die Trennung mittels Membranen, Adsorbermaterialien oder Waschlösungen durchgeführt werden. Daneben kommen auch katalytische oder thermische Verbrennungen sowie die Reduktion bestimmter Anteile des Gemisches in Frage. Auch können Teile des Gemisches durch Auskondensieren abgetrennt werden. Die für viele Anwendungsfälle geeigneten $N_2/CO_2$-Gemische lassen sich z.B. je nach Zusammensetzung günstiger durch Adsorption oder durch Membranen trennen, ggf. durch eine Kombination von Adsorption und Membranen. So wird $CO_2$ an nahezu allen Adsorbermaterialien besser gebunden als $N_2$. Bei kleinen $CO_2$-Gehalten in diesem Gemisch ist daher die Adsorptionstechnologie zu bevorzugen.

Vielfach wird man auf eine vollständige Trennung des Gemisches aus wirtschaftlichen Gründen verzichten und die nichtgetrennten Anteile durch frisches Lösungsmittel und frische Zusatzkomponenten ersetzen. Es handelt sich hierbei um Fragen der wirtschaftlichen Optimierung, die im Einzelfall entschieden werden müssen.

Entscheidender Vorteil des erfindungsgemässen Verfahrens ist, dass sowohl der Rückstand als auch das Extrakt in weiterverwertbarer Form anfallen. Insbesondere bei isobarer und isothermer Fahrweise, d.h. ohne nennenswerte Druck- und Temperaturdifferenzen zwischen Extraktor und Abscheider, fällt das Extrakt in reiner Form an und nicht angelagert wie z.B. an Adsorbermaterial oder verdünnt wie z.B. in Waschlösungen.

Ein weiterer Vorteil des erfindungsgemässen Verfahrens ist, dass durch die Zumischung der Zusatzkomponente die Gewinnung der Extrakte wirtschaftlicher ist, da selbst dann, wenn zur optimalen Durchführung des Extraktionsverfahrens Druck- und Temperaturveränderungen zwischen Extraktion und Abscheidung durchgeführt werden müssen, diese erheblich kleiner sind als ohne den erfindungsgemässen Einsatz von Zusatzkomponenten. Die Aufbereitung und Regenerierung des Gemisches aus Lösungsmittel und Zusatzkomponente kann nach verschiedenen, den jeweiligen Zusammensetzungen optimal angepassten Verfahren wirtschaftlich durchgeführt werden. Sowohl in der Membrantechnologie als auch in der Adsorptionstechnologie, insbesondere der Druckwechseladsorption, lassen sich gute Trennerfolge für die in Frage kommenden Zusammensetzungen mit wesentlich kleineren Druckdifferenzen erzielen, als dies bei der bisher üblichen Trennung von Lösungsmittel und Extrakten möglich ist.

Die Vorteile des erfindungsgemässen Verfahrens lassen sich anhand der Entkoffeinierung von Rohkaffee und der Entnikotinisierung von Tabak zeigen.

Aus rohen, angefeuchteten Kaffeebohnen kann man mit feuchten $CO_2$ unter hohen Drücken von ca. 300 bar und Temperaturen von ca. 80° C Coffein gut herauslösen. Die Abtrennung des gelösten Coffeins ist allerdings schwierig. Bei 80° C und 300 bar beträgt die Coffeinlöslichkeit in $CO_2$ ca. 4 mg/g, bei 80° C und 250 bar noch knapp 1 mg/g und erst bei 80° C und 160 bar wird eine Löslichkeit von ca. 0,1 mg/g erreicht. Eine isotherme Abscheidung von Coffein in zufriedenstellendem Ausmass allein durch Druckabsenkung erfordert daher einen Druckunterschied zwischen Extraktor und Abscheider von mehr als 100 bar. Die isobare Abscheidung kommt praktisch nicht in Frage, da bei 300 bar selbst bei 38° C noch eine Coffeinlöslichkeit von ca. 2 mg/g vorhanden ist.

Wird nach dem Extraktor dem beladenen $CO_2$ erfindungsgemäss z.B. $N_2$ als Zusatzkomponente zugemischt, so sinkt die Löslichkeit des Gemisches aus Lösungsmittel und Zusatzkomponente drastisch. Bei einem $N_2$-Anteil von 5% im Gemisch sinkt sie auf ca. 80%, bei 10% $N_2$-Anteil auf ca. 40% und bei 25% $N_2$-Anteil auf ca. 10% des Wertes für reines $CO_2$. Diese Angaben beziehen sich auf 300 bar und 80° C. Durch die erfindungsgemässe Zumischung von $N_2$ als Zusatzkomponente zum beladenen Lösungsmittel $CO_2$ wird somit bei isobarer und isothermer Fahrweise eine weitgehende Abscheidung des Extraktes erreicht.

Die Trennung des Gemisches aus $CO_2$ und $N_2$ nach der Abtrennung des Coffeins kann beispielsweise mit speziellen Löslichkeitsmembranen erfolgen, die für $CO_2$ einen Permeabilitäts-Koeffizienten von annähernd 4250 kgm/Ns und für $N_2$ von ca. 235 kgm/Ns aufweisen.

Auch bei der Entnikotinisierung von Tabak lässt sich das erfindungsgemässe Verfahren mit Vorteil einsetzen. $CO_2$ hat bei ca. 150 bar und 50° C ein gutes, praktisch optimales Lösungsvermögen für Nikotin und kann etwa 80 mg/g aufnehmen. Werden erfindungsgemäss dem beladenen $CO_2$ 25% $N_2$ als Zusatzkomponente zugemischt, führt dies zu einer drastischen Absenkung der Löslichkeit auf ca. 2,5% des Wertes für reines $CO_2$. Dieser Effekt lässt sich auch durch Zumischung von 10% Ar erreichen. Die Löslichkeitswerte für die $N_2/CO_2$- bzw. $Ar/CO_2$-Gemische beziehen sich ebenfalls auf 150 bar und 50° C. Bei der Abtrennung von Ölen aus Naturstoffen sind organische Gase häufig bessere Lösungsmittel als $CO_2$. Auch hierbei kann das Lösungsvermögen erfindungsgemäss durch Zumischen einer Zusatzkomponente, insbesondere $N_2$, drastisch verringert werden.

Drei Ausführungsbeispiele der Erfindung in allgemeiner Form sollen anhand der beigefügten Zeichnungen erläutert werden.

Es zeigen:

Fig. 1 das Verfahrensschema einer einstufigen Druckextraktion,

Fig. 2 das Verfahrensschema einer Druckextraktion mit zweistufiger Abscheidung und einer Zusatzkomponente gleicher Zusammensetzung,

Fig. 3 das Verfahrensschema einer Druckextraktion mit zweistufiger Abscheidung und zwei Zusatzkomponenten verschiedener Zusammensetzung.

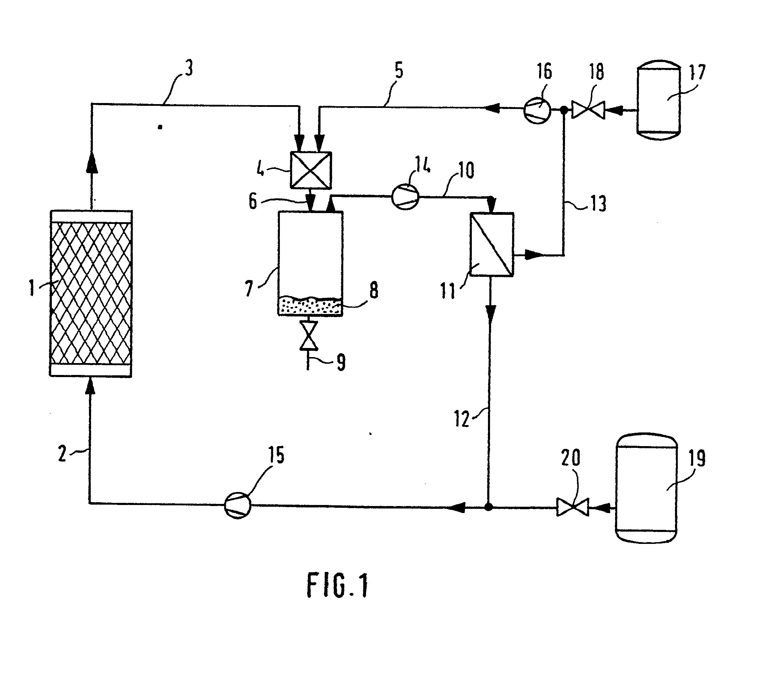

Das in Fig. 1 dargestellte Verfahrensschema kann beispielsweise bei der zuvor beschriebenen Entcoffeinierung von Rohkaffee oder Entnikotinisierung von Tabak angewendet werden. Im Extraktor 1 befindet sich das zu extrahierende Stoffgemisch. In den Extraktor 1 strömt durch Leitung 2 das Lösungsmittel unter den gewünschten Druck- und Temperaturbedingungen. Es belädt sich im Extraktor 1 mit dem zu extrahierenden Inhaltsstoff und verlässt den Extraktor 1 durch die Leitung 3. Erfindungsgemäss wird dem beladenen Lösungsmittel in einer Mischeinrichtung 4 eine Zusatzkomponente zugemischt, die durch die Leitung 5 in die Mischeinrichtung 4 gelangt. Das Gemisch aus beladenem Lösungsmittel und Zusatzkomponente tritt durch die Leitung 6 in den Abscheider 7 ein. Infolge der durch die erfindungsgemässe Zumischung der Zusatzkomponente drastisch verringerten Löslichkeit fallen die zuvor gelösten Inhaltsstoffe im Abscheider 7 als Extrakt 8 aus und können durch Leitung 9 entnommen werden. Das weitgehend von den gelösten Inhaltsstoffen befreite Gemisch aus Lösungsmittel und Zusatzkomponente gelangt durch die Leitung 10 in die Aufbereitungsstufe 11. Hier wird das Gemisch wieder in seine Bestandteile getrennt und die einzelnen Teilströme werden den entsprechenden Prozessstufen erneut zugeführt. Das Lösungsmittel gelangt aus der Aufbereitungsstufe 11 durch die Leitungen 12 und 2 erneut in den Extraktor 1, die Zusatzkomponente strömt durch die Leitungen 13 und 5 erneut in die Mischeinrichtung 4. Druckverluste im System werden durch die Pumpen 14, 15 und 16 ausgeglichen. Aus dem Vorratsbehälter 17 für die Zusatzkomponente und dem Vorratsbehälter 19 für das Lösungsmittel wird bei geöffneten Absperrventilen 18 und 20 zu Beginn des Prozesses die Anlage gefüllt. Erforderlichenfalls kann während des Prozesses aus den Vorratsbehältern auch nachgespeist werden.

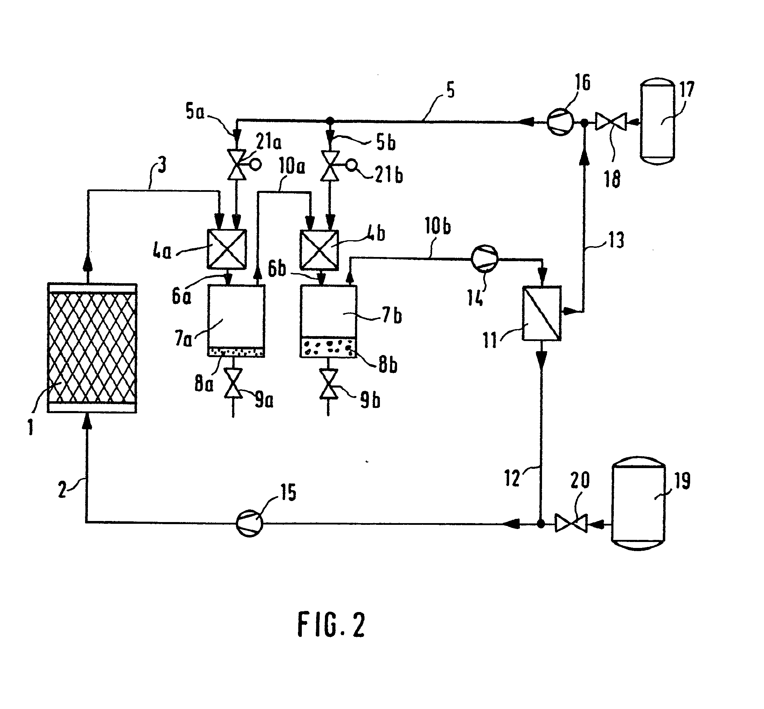

Fig. 2 zeigt das Verfahrensschema einer Druckextraktion mit zweistufiger Abscheidung und einer Zusatzkomponente gleicher Zusammensetzung. Für gleiche Anlagenteile wurden die Positionsziffern von Fig. 1 beibehalten. Es werden zwei Abscheider 7a, 7b mit vorgeschalteten Mischeinrichtungen 4a, 4b verwendet. Das beladene Lösungsmittel aus dem Extraktor 1 gelangt durch Leitung 3 in die erste Mischeinrichtung 4a, wo ihm erfindungsgemäss eine Zusatzkomponente über Leitung 5a und Regulierventil 21a zugemischt wird. Durch Leitung 6a gelangt das Gemisch in den Abscheider 7a, wo gelöste Inhaltsstoffe als Extrakt 8a ausfallen und durch Leitung 9a abgezogen werden können. Das den Abscheider 7a durch Leitung 10a verlassende Gemisch aus Lösungsmittel, nicht ausgefällten Inhaltsstoffen und Zusatzkomponente wird anschliessend in eine nachgeschaltete Mischeinrichtung 4b geführt, wo ihm durch Leitung 5b und Regulierventil 21b weitere Zusatzkomponente zugemischt wird. Dadurch wird die Löslichkeit weiter reduziert. Aus dem durch Leitung 6b in den Abscheider 7b eintretenden Gemisch fällt eine zweite Extrakt-Fraktion 8b aus und kann durch Leitung 9b abgezogen werden. Durch Leitung 10b gelangt das Gemisch aus Lösungsmittel und Zusatzkomponente in die Aufbereitungsstufe 11. Der weitere Verfahrensablauf entspricht dem von Fig. 1.

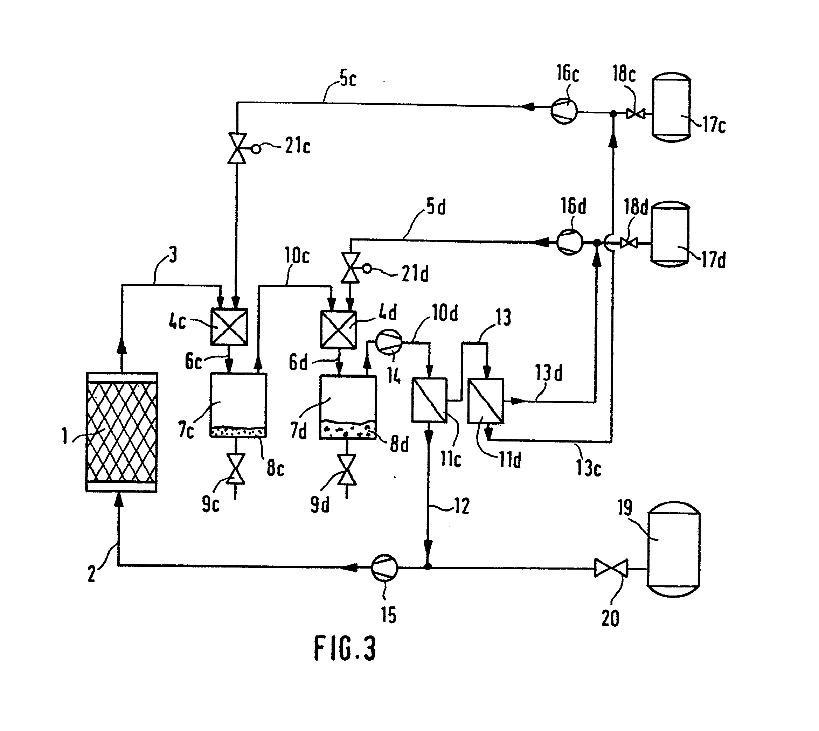

Fig. 3 zeigt eine Druckextraktion mit zweistufiger Abscheidung, bei der zwei Zusatzkomponenten verschiedener Zusammensetzung eingesetzt werden. Für gleiche Anlagenteile wurden wiederum die Positionen von Fig. 1 beibehalten. Es sind wie in Fig. 2 die Mischeinrichtung 4c, Leitung 6c, Abscheider 7c, Leitung 10c, Mischeinrichtung 4d, Leitung 6d und Abscheider 7d hintereinandergeschaltet. Es werden jedoch verschieden zusammengesetzte Zusatzkomponenten verwendet. Die eine gelangt aus dem Vorratsbehälter 17c durch das Absperrventil 18c, die Pumpe 16c, die Leitung 5c und das Regulierventil 21c in die Mischeinrichtung 4c. Entsprechend gelangt die andere Zusatzkomponente aus dem Vorratsbehälter 17d durch das Absperrventil 18d, die Pumpe 16d, die Leitung 5d und das Regulierventil 21d in die Mischeinrichtung 4d. Es werden demgemäss unterschiedliche Extrakte 8c und 8d gewonnen, die durch die Leitungen 9c und 9d abgezogen werden können. Das Gemisch aus Lösungsmittel und Zusatzkomponente wird durch Leitung 10d aus dem Abscheider 7d abgezogen. In den hintereinandergeschalteten Aufbereitungsstufen 11c und 11d wird zunächst in der Aufbereitungsstufe 11c das Lösungsmittel abgetrennt und durch Leitung 12 dem Extraktor 1 wieder zugeführt. Anschliessend wird in der Aufbereitungsstufe 11d das Gemisch der Zusatzkomponenten voneinander getrennt und durch die Leitungen 13c, 13d und Pumpen 16c, 16d den zugehörigen Mischeinrichtungen erneut zugeführt.

### Patentansprüche

1. Verfahren zur Trennung von organische Bestandteile enthaltenden Stoffgemischen durch Extraktion (1) mittels eines gasförmigen Lösungsmittels (2), bei dem das Stoffgemisch mit dem Lösungsmittel unter Druck- und Temperaturbedingungen in Kontakt gebracht wird, unter denen sich das Lösungsmittel mit Bestandteilen des Stoffgemisches belädt, wonach die gelösten Bestandteile vom beladenen Lösungsmittel abgetrennt und als Extrakt (8, 8a, b, c, d) entfernt werden, während das Lösungsmittel dem Stoffgemisch zwecks weiterer Extraktion erneut zugeführt wird, dadurch gekennzeichnet, dass dem beladenen Lösungsmittel mindestens eine Zusatzkomponente (5, 5a, b, c, d) zugemischt wird, welche das Lösungsvermögen des Lösungsmittels stark herabsetzt und dadurch ein Ausfällen von zumindest einem Teil der als Extrakt zu gewinnenden Bestandteile bewirkt.

2. Verfahren nach Anspruch 1, dadurch gekennzeichnet, dass das von den ausgefällten Bestandteilen befreite Lösungsmittel-Zusatzkomponenten-Gemisch in einer Aufbereitungsstufe (11, 11c) in Lösungsmittel und Zusatzkomponente getrennt wird, wonach das Lösungsmittel dem Stoffgemisch zwecks weiterer Extraktion erneut zugeführt und die Zusatzkomponente dem beladenen Lösungsmittel erneut zugemischt wird.

3. Verfahren nach Anspruch 1 oder 2, dadurch gekennzeichnet, dass ein aus mehreren Komponenten bestehendes Lösungsmittel verwendet wird.

4. Verfahren nach einem der Ansprüche 1 bis 3, dadurch gekennzeichnet, dass in mehreren hintereinandergeschalteten Misch- und Abtrennstufen Zusatzkomponenten zugemischt werden, um eine fraktionierte Abscheidung verschiedener Extrakte zu bewirken.

5. Verfahren nach Anspruch 4, dadurch gekennzeichnet, dass unterschiedliche Zusatzkomponenten zugemischt werden.

6. Verfahren nach einem der Ansprüche 1 bis 5, dadurch gekennzeichnet, dass bei der Extraktabtrennung mit Drücken und Temperaturen gearbeitet wird, die gegenüber den Extraktionsbedingungen unterschiedlich sind.

7. Verfahren nach einem der Ansprüche 1 bis 6, dadurch gekennzeichnet, dass die Trennung von Lösungsmittel und Zusatzkomponente in der Aufbereitungsstufe durch Adsorption und/oder Membranen erfolgt.

8. Verfahren nach einem der Ansprüche 1 bis 7, dadurch gekennzeichnet, dass die Zusatzkomponente aus $CO_2$, $N_2O$, $NH_3$, $N_2$, Ar, Methan, Äthan, Propan, Methanol, Toluol, chlorierten Kohlenwasserstoffen oder Mischungen davon besteht.

9. Verfahren nach Anspruch 8, dadurch gekennzeichnet, dass die Zusatzkomponente aus $N_2$ und/oder Ar besteht.

### Claims

1. In a procedure for segregating mixtures of substances containing organic components by means of extraction (1) with a gaseous solvent (2) whereby the mixture of substances is brought into contact with the solvent under pressure and temperature conditions under which the solvent is charged with components of the mixture of substances whereafter the dissolved components are segregated from the charged solvent and removed as extract (8, 8a, b, c, d), while the solvent is returned into contact with the mixture of substances for purposes of further extraction, the improvement being in admixing at least one additive component (5, 5a, b, c, d) to the charged solvent whereby the solvent capacity of the solvent is strongly reduced and consequently a precipitation is achieved for at least a portion of the components to be captured as extract.

2. Procedure according to claim 1, characterized thereby that the mixture of solvent/additive component from which the precipitated components have been removed, is segregated into solvent and additive component in a preparation stage (11, 11c), whereafter the solvent is again added to the mixture of substances for purposes of continued extraction, and the additive component is again admixed to the charged solvent.

3. Procedure according to claim 1 or 2, characterized thereby that a solvent consisting of several components is used.

4. Procedure according to one of the claims 1 to 3, characterized thereby that additive components are admixed in several mixing and segregation stages coupled in series, in order to effect a fractionated segregation of various extracts.

5. Procedure according to claim 4, characterized thereby that different additive components are admixed.

6. Procedure according to one of the claims 1 to 5, characterized thereby that the segregation of the extract is carried out with pressures and temperatures which are different from those of the extraction conditions.

7. Procedure according to one of the claims 1 to 6, characterized thereby that the segregation of solvent and additive components takes place in the preparation stage by means of adsorption and/or membranes.

8. Procedure according to one of the claims 1 to 7, characterized thereby that the additive component is selected from the group consisting of $CO_2$, $N_2O$, $NH_3$, $N_2$, Ar, methane, ethane, propane, methanol, toluene, chlorinated hydrocarbons and mixtures thereof.

9. Procedure according to claim 8, characterized thereby that the additive component consists of $N_2$ and/or Ar.

**Revendications**

1. Procédé de séparation de mélange de matières contenant des composants organiques, par extraction (1) à l'aide d'un solvant gazeux (2), procédé selon lequel le mélange de matières est mis en contact avec le solvant dans des conditions de pression et de température pour lesquelles le solvant se charge des composants du mélange, puis on sépare les composants dissous contenus dans le solvant chargé et on les évacue comme extraits (8, 8a, b, c, d) et on renvoie le solvant de nouveau au mélange de matières pour poursuivre l'extraction, procédé caractérisé en ce qu'on ajoute au solvant chargé au moins un composant additionnel (5, 5a, b, c, d), qui réduit fortement le pouvoir de dissolution du solvant et on assure ainsi la séparation d'au moins une partie des composants à recueillir comme extrait.

2. Procédé selon la revendication 1, caractérisé en ce que pour le mélange solvant-composant additionnel dont on a enlevé les composants qui se sont séparés, on procède dans un étage de préparation (11, 11c) à une séparation en solvant et composant additionnel, le solvant étant fourni de nouveau au mélange de matières pour poursuivre l'extraction et le composant additionnel étant de nouveau ajouté au solvant chargé.

3. Procédé selon les revendications 1 ou 2, caractérisé en ce qu'on utilise un solvant comprenant plusieurs composants.

4. Procédé selon l'une des revendications 1 à 3, caractérisé en ce que: on ajoute des composants additionnels dans plusieurs étages de mélange de séparation en série pour arriver à une séparation fractionnée des différents extraits.

5. Procédé selon la revendication 4, caractérisé en ce qu'on ajoute des composants additionnels différents.

6. Procédé selon l'une des revendications 1 à 5, caractérisé en ce que: lors de la séparation de l'extrait, on travaille à des pressions et des températures différentes des conditions régnant au moment de l'extraction.

7. Procédé selon l'une des revendications 1 à 6, caractérisé en ce que: la séparation du solvant et du composant additionnel se fait dans l'étage de préparation par adsorption et/ou à l'aide de membranes.

8. Procédé selon l'une des revendications 1 à 7, caractérisé en ce que: les composants additionnels sont $CO_2$, $N_2O$, $NH_3$, $N_2$, Ar, méthane, éthane, propane, méthanol, toluène, hydrocarbures chlorés ou des mélanges de ces produits.

9. Procédé selon la revendication 8, caractérisé en ce que les composants additionnels comprennent $N_2$ et/ou Ar.

FIG.1

FIG. 2

FIG.3